# EUROPEAN PATENT APPLICATION

(11) **EP 4 290 239 A1**
(43) Date of publication of application: **13.12.2023**
(21) Application number: 21924818.4
(22) Date of filing: 08.12.2021
(51) Int. Cl.: G01N 35/00

(54) **AUTOMATIC ANALYSIS DEVICE AND AUTOMATIC ANALYSIS SYSTEM**

(30) Priority: 08.02.2021 JP 2021018031
(71) Applicant: HITACHI HIGH-TECH CORPORATION, Tokyo 105-6409 (JP)
(72) Inventor: KOIZUMI, Nobuhiro, Tokyo 105-6409 (JP); KAWASAKI, Kenji, Tokyo 105-6409 (JP); NAKAJIMA, Aika, Tokyo 105-6409 (JP); SEKI, Yoshihiro, Tokyo 105-6409 (JP)
(74) Representative: MERH-IP Matias Erny Reichl Hoffmann Patentanwälte PartG mbB
(86) International application number: PCT/JP2021/045125
(87) International publication number: WO 2022/168433

(57) **Abstract**

Provided is an automatic analysis device in which safety is ensured, and operability is improved. The present invention is an automatic analysis device 100 comprising: an operation unit 102 that receives voice input from a microphone 103 or a mobile device 107; and a measurement unit 101 that analyzes a sample. The operation unit has: an equipment state acquisition unit 213 that acquires equipment state data for the measurement unit; a voice detection/recognition unit 211 that acquires voice data and converts the voice data into voice instruction text; and a unit for determining device operability 214 that, in cases in which the voice instruction text includes operation instructions for the measurement unit, determines the executability of the operation instructions included in the voice instruction text, on the basis of the equipment state data for the measurement unit acquired by the equipment state acquisition unit, and on the basis of the accuracy of the voice instruction text.

## Description

### Technical Field

The present invention relates to an automatic analysis device that executes spectrometry, emission spectrometry, chromatography, mass spectrometry, and the like, and an automatic analysis system including a plurality of automatic analysis devices.

### Background Art

The automatic analysis device biochemically or immunologically analyzes a specimen such as blood or urine and photochemically or electrically detects a reaction that occurs between a trace substance to be analyzed in the specimen and an inspection reagent component.

In an automatic analysis device in the related art, an operation instruction such as start or stop of measurement is given using a switch, a touch panel, or the like. Therefore, when both hands hold a test tube or a reagent bottle and are full, the automatic analysis device cannot be operated. When the automatic analysis device is operated, there is a risk that a hand of a user (operator) touches blood or the like including an infectious agent such as bacteria or viruses.

On the other hand, recently, a technique of voice recognition has progressed significantly such that smart home appliances that can be operated by voice have already become commercialized in the field of home appliances and the like. Even in the automatic analysis device, the application of a voice input technique capable of operation without touching the device has been considered.

For example, in a device of PTL 1, a voice recognition device that converts a voice signal into a predetermined code is connected to an instruction reception unit that gives an operation instruction to an analysis unit such that voice input can be made. As a result, even when both hands are full, the analysis device can be operated by voice.

A device of PTL 2 includes: a detection unit configured to detect an instruction of a user using at least one of a sound or a video; a recording unit configured to record analysis information for analyzing the content of the sound or the video; a recognition unit configured to recognize the instruction of the user based on the sound or the video detected by the detection unit and the analysis information; and a control signal output unit configured to output a control signal for controlling an operation of the automatic analysis device based on the instruction content recognized by the recognition unit. The recognition unit includes an operation identification unit configured to identify the user based on the analysis information and a plurality of pieces of information output from the user detected by the detection unit and to identify an operation that is executable by the user identified by the recognition unit. As a result, from the viewpoints of not only biosafety but also security, a safe specimen test can be executed.

### Citation List

### Patent Literature

PTL 1: JPH7-318565A
PTL 2: JP2020-51800A

### Summary of Invention

### Technical Problem

In both PTLs, the convenience of the user can be improved by executing an operation by voice. However, when the automatic analysis device is operated, in particular, it is important to ensure safety for an operation against erroneous voice recognition. It is considered that, generally, when voice is used as input means, an erroneous operation caused by erroneous voice recognition is likely to occur as compared to direct input means such as a touch panel. Depending on the user, for example, when the articulation is poor, when the voice is small, when the user speaks fast, when the user wears a mask, or when the ambient noise is large, erroneous recognition may occur at a particularly high probability. When an inappropriate operation is executed on the automatic analysis device, an accident that causes harm may also occur, and it is important to ensure the safety.

With the voice input, even when the user is in a location distant from the device, the user can operate the device as long as the voice reaches the device. Therefore, the user may give an operation instruction while forgetting a necessary safety check for the device. Then, an unexpected accident may occur due to the insufficient check of the user for the device and the surrounding status thereof.

The present invention has been made in consideration of the above-described points, and an object thereof is to provide an automatic analysis device or an automatic analysis system in which the automatic analysis device can be operated by voice input to improve convenience and the safety against erroneous voice recognition is improved.

### Solution to Problem

According to one embodiment of the present invention, there is provided an automatic analysis device including:
an operation unit configured to receive a voice input from a microphone or a mobile device; and
a measurement unit configured to analyze a specimen, in which
the operation unit includes
a device state acquisition unit configured to acquire device state data of the measurement unit,
a voice detection/recognition unit configured to acquire voice data that is a digital signal converted from a voice input to the microphone or voice data that is a digital signal converted from a voice input to the mobile device and to convert the voice data into a voice instruction text, and
a device operation permission determination unit configured to determine, when the voice instruction text includes an operation instruction to the measurement unit, whether the operation instruction including the voice instruction text is executable based on the device state data of the measurement unit acquired by the device state acquisition unit and an accuracy of the voice instruction text.

According to another embodiment of the present invention, there is provided an automatic analysis system including:
a plurality of automatic analysis devices each of which includes a measurement unit configured to analyze a specimen; and
a management server configured to connect the plurality of automatic analysis devices via a network and to manage the plurality of automatic analysis devices, in which
one or more automatic analysis devices among the plurality of automatic analysis devices are operated through a voice input from a mobile device, and
the management server includes
a device state acquisition unit configured to acquire device state/operation information data including device state data of the measurement unit and operation information for the automatic analysis device relating to the device state data from the plurality of automatic analysis devices,
a voice detection/recognition unit configured to acquire voice data that is a digital signal converted from a voice input to the mobile device and to convert the voice data into a voice instruction text,
a system management unit configured to identify, when the voice instruction text includes an operation instruction to the automatic analysis device, an automatic analysis device to be operated by the operation instruction including the voice instruction text, and
a device communication unit configured to transmit voice data acquired from the mobile device or a voice instruction text corresponding to the voice data to the automatic analysis device identified by the system management unit.

### Advantageous Effects of Invention

Provided is an automatic analysis device or an automatic analysis system in which the operability is improved while ensuring the safety.

Objects, configurations, and effects other than those described above will be clarified by describing the following embodiments.

### Brief Description of Drawings

[Fig. 1] Fig. 1 is a diagram illustrating a configuration example of an automatic analysis system according to a first embodiment.
[Fig. 2A] Fig. 2A is a diagram illustrating a hardware configuration example of an operation unit.
[Fig. 2B] Fig. 2B is a diagram illustrating a configuration example of software blocks relating to a voice input process in the first embodiment.
[Fig. 3] Fig. 3 is a diagram illustrating a voice input process sequence example in the first embodiment.
[Fig. 4] Fig. 4 is a flowchart illustrating an operation permission determination process.
[Fig. 5] Fig. 5 is a diagram illustrating a data structure of a determination table.
[Fig. 6] Fig. 6 is a diagram illustrating a configuration example of an automatic analysis system according to a second embodiment.
[Fig. 7] Fig. 7 is a diagram illustrating a voice input process sequence example in the second embodiment.
[Fig. 8] Fig. 8 is a diagram illustrating a configuration example of software blocks relating to the voice input process in the second embodiment.
[Fig. 9] Fig. 9 is a flowchart illustrating a voice input process program that is executed by a management server.
[Fig. 10] Fig. 10 is a diagram illustrating a data structure of a management table.
[Fig. 11] Fig. 11 is a diagram illustrating a configuration example of software blocks relating to the voice input process in the second embodiment.

### Description of Embodiments

### First Embodiment

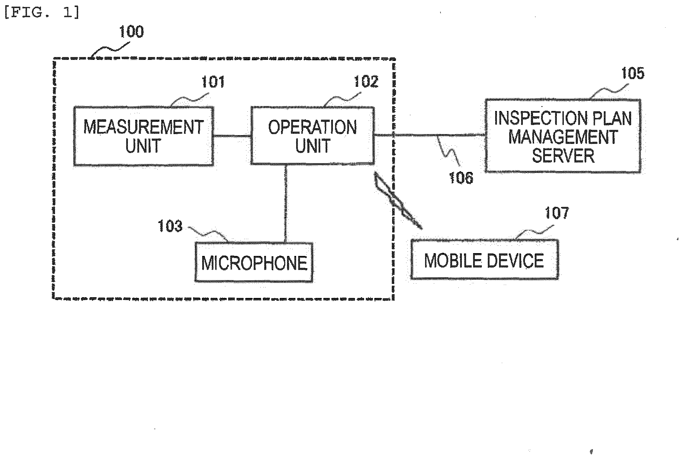

In a first embodiment, an example where one user operates one automatic analysis device by voice will be described. Fig. 1 is a diagram illustrating a configuration example of the automatic analysis system according to the first embodiment. The automatic analysis device 100 includes a measurement unit 101 and an operation unit 102. The measurement unit 101 biochemically or immunologically analyzes a specimen such as blood or urine and photochemically or electrically detects a reaction that occurs between a trace substance to be analyzed in the specimen and an inspection reagent component. The measurement unit corresponding to the analysis that is executed by the automatic analysis device 100, for example, spectrometry, emission spectrometry, chromatography, or mass spectrometry is provided. Here, the example where one measurement unit is provided will be described. However, a plurality of measurement units may be provided. The operation unit 102 is connected to the measurement unit 101 and generates a control instruction (command) in response to an instruction of a user to transmit the generated control instruction to the measurement unit 101 or receives a measurement result of the measurement unit 101 to display the received measurement result on a screen or the like.

In the automatic analysis device 100 according to the embodiment, the operation unit 102 includes a microphone 103 to enable voice input. By enabling voice input, the user outputs an instruction to the automatic analysis device 100 even without directly operating the operation unit 102 (for example, an operation that accompanies a finger touch through a GUI screen or a button or a keyboard in the operation unit 102). To improve the convenience, in the system, a mobile device 107 that is wirelessly connected to the operation unit 102 is provided. The mobile device 107 is not particularly limited as long as it is a device that includes a microphone and is carried or worn by the user, and a pin microphone, a headphone, a smartphone, a tablet, smart glasses, a smart watch, or the like can be considered. As a result, even when the user is in a location slightly distant from the microphone 103 of the automatic analysis device 100 to be operated, voice input through the mobile device 107 can be made, and the convenience can be further improved.

An inspection plan management server 105 makes a one-day inspection plan in a facility where the automatic analysis device 100 is provided, and distributes the inspection schedule to the automatic analysis device in the facility. The inspection schedule includes information such as a time when the automatic analysis device starts a pre-measurement preparation or a time when the automatic analysis device starts a specific operation such as maintenance, calibration, or precision management. The operation unit 102 and the inspection plan management server 105 are communicably connected via a network 106.

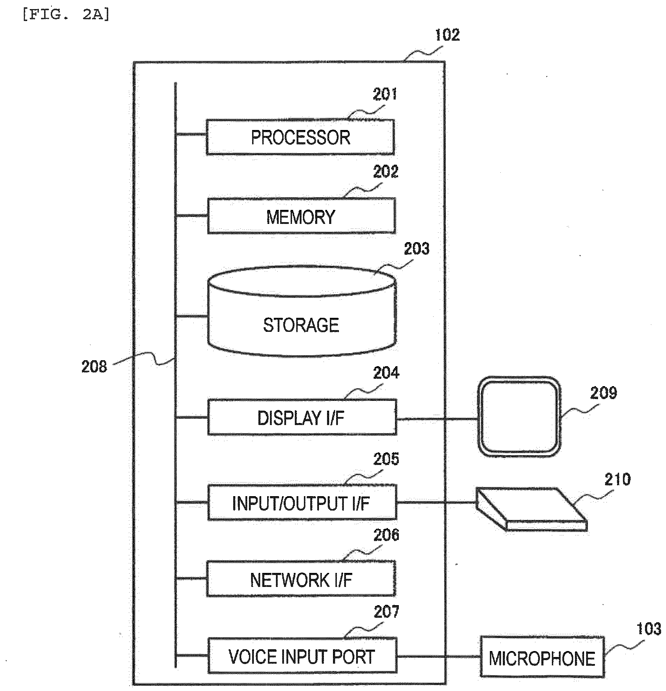

Fig. 2A illustrates a hardware configuration example of the operation unit 102. The operation unit 102 includes a processor 201, a memory 202, a storage 203, a display interface 204, an input/output interface 205, a network interface 206, and a voice input port 207, which are connected via a bus 208. The operation unit 102 may include an input/output (I/O) port for connection to an external device. The voice input port 207 is connected to the microphone 103. The input/output interface 205 is connected to an input device 210 such as a keyboard or a button, and the display interface 204 is connected to a display 209 and implements graphical user interface (GUI). The network interface 206 is an interface for connection to the network 106 or the mobile device 107. The storage 203 is typically configured by hard disk drive (HDD), solid state drive (SSD), or a nonvolatile memory such as a flash memory, and stores a program to be executed by the operation unit 102, data to be processed by a program, and the like. The memory 202 is configured by random access memory (RAM) and temporarily stores program, data, or the like required to execute the program in response to a command of the processor 201. The processor 201 executes the program loaded from the storage 203 to the memory 202.

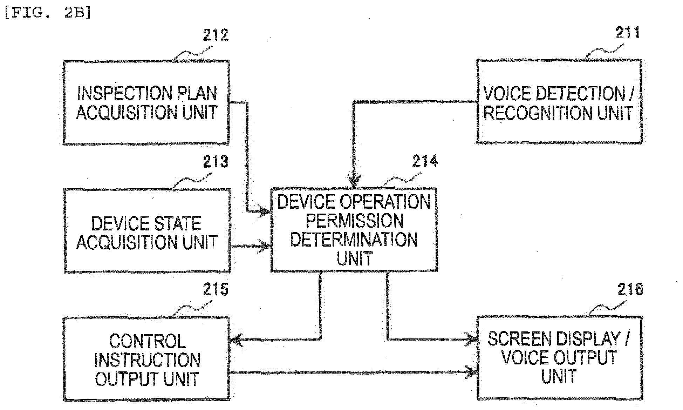

Fig. 2B illustrates a configuration example of software blocks relating to a voice input process of the operation unit 102. The function of the operation unit 102 implements a predetermined process in cooperation with another hardware by the processor 201 executing the program stored in the storage 203. A program to be executed by a computer or the like, a function thereof, or means for implementing the function will also be referred to as "function", "unit", or the like.

A voice detection/recognition unit 211 executes a process of acquiring voice data that is a digital signal converted from a voice input to the microphone 103 by the voice input port 207 or voice data that is a digital signal converted from a voice input to the mobile device 107 and recognizing the content of the voice data. An inspection plan acquisition unit 212 acquires the inspection schedule of the automatic analysis device from the inspection plan management server 105. A device state acquisition unit 213 acquires device state data representing a device state of the measurement unit 101. A device operation permission determination unit 214 determines whether the device operation corresponding to the instruction of the user recognized by the voice detection/recognition unit 211 is permitted based on the device state data acquired by the device state acquisition unit 213 and the information of the inspection schedule acquired by the inspection plan acquisition unit 212. A control instruction output unit 215 receives the operation instruction of the user from the device operation permission determination unit 214 and transmits the corresponding control instruction to the measurement unit 101. A screen display/voice output unit 216 executes a process of displaying the device operation or the result of the analysis measurement on a screen or outputting the device operation or the result of the analysis measurement from a speaker by voice.

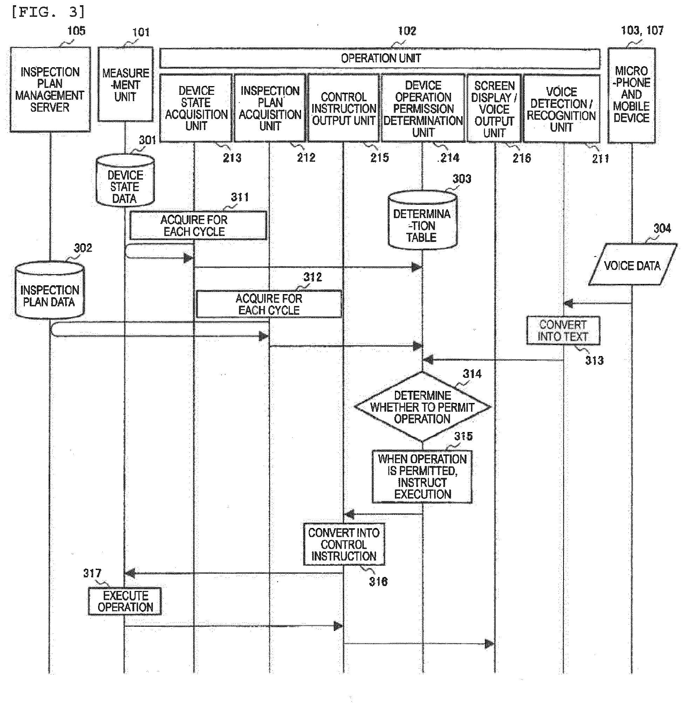

Fig. 3 is a diagram illustrating a voice input process sequence example of the automatic analysis device.

The inspection plan acquisition unit 212 acquires the inspection schedule (inspection plan data 302) from the inspection plan management server 105 for each cycle (Step 312), and transmits the inspection schedule to the device operation permission determination unit 214. Alternatively, when the inspection schedule is changed, the inspection plan management server 105 may be configured to transmit the changed inspection schedule to the inspection plan acquisition unit 212. The device state acquisition unit 213 acquires device state data 301 from the measurement unit 101 for each cycle (Step 311), and transmits the device state data 301 to the device operation permission determination unit 214. Alternatively, when the device state is changed, the measurement unit 101 may be configured to transmit the changed device state data 301 to the device state acquisition unit 213.

The user speaks words for operating the device, for example, "start", "stop", "maintenance start", "calibration start", or "precision management start" from the microphone 103 or the mobile device 107. The microphone 103 or the mobile device 107 acquires voice data 304 and transmits the voice data 304 to the voice detection/recognition unit 211. The voice detection/recognition unit 211 converts the voice data 304 into text data (also referred to as "voice instruction text") (Step 313) and transmits the text data to the device operation permission determination unit 214.

When the voice instruction text is received from the voice detection/recognition unit 211, the device operation permission determination unit 214 determines whether an operation corresponding to the instruction content of the voice instruction text is permitted based on the latest inspection schedule and device state data currently (Step 314). The details of the determination process will be described below. When the operation is permitted, the device operation permission determination unit 214 transmits an operation instruction for implementing the operation to the control instruction output unit 215 (Step 315). The control instruction output unit 215 converts the received operation instruction into a control instruction (command) corresponding thereto (Step 316), and transmits the control instruction to the measurement unit 101. The measurement unit 101 executes the operation corresponding to the control instruction (Step 317). After executing the operation, the measurement unit 101 transmits the execution result to the control instruction output unit 215, and the control instruction output unit 215 transmits the execution result to the screen display/voice output unit 216. The screen display/voice output unit 216 outputs the execution result of the instruction by voice input to the user using a screen or a voice. A method of outputting the screen or the voice may be optimized for characteristics of a device that outputs the screen or the voice. For example, when the display screen is a screen of a tablet, the detailed information is displayed and, for example, when the display screen is a screen of a smart watch, information to be displayed is minimized and a voice and vibration may be used in combination.

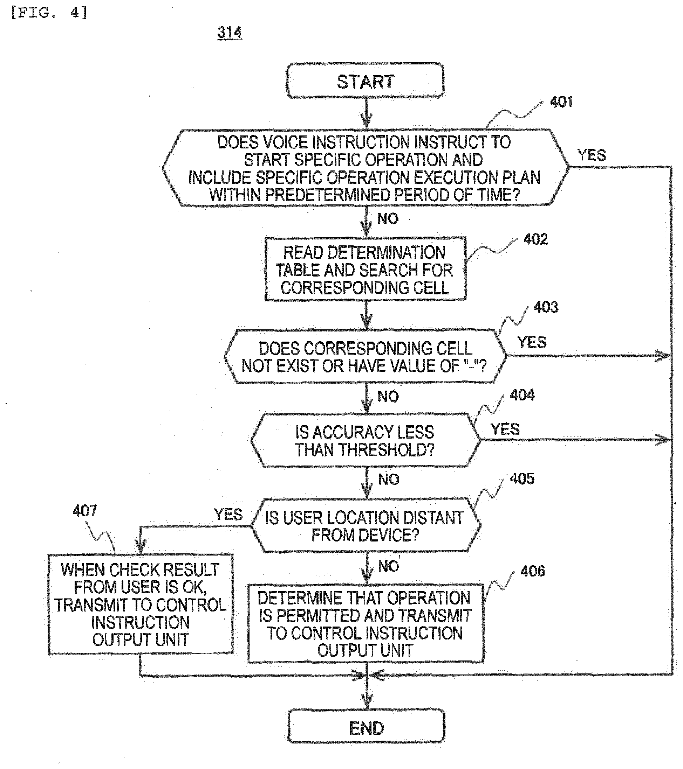

A process example of an operation permission determination process (Step 314) of the device operation permission determination unit 214 will be described using a flowchart of Fig. 4.

First, when the voice instruction text is to instruct specific operation start and an execution plan of the specific operation is present within a predetermined time in the inspection schedule, the process ends (Step 401) without outputting the operation instruction of the specific operation start (without permitting the operation).

An example of the specific operation is maintenance. Here, the screen display/voice output unit 216 may output a guidance "the present device is planned to execute maintenance N hours later and thus does not execute maintenance at the moment" by voice. The specific operation is not limited to maintenance. For example, calibration or precision management can be set as the specific operation. Even then, similarly, the screen display/voice output unit 216 may output a guidance "the present device is planned to execute calibration (precision management) N hours later and thus does not execute calibration (precision management) at the moment" by voice. The predetermined time as a criterion for determining that the operation is not permitted and the process ends varies depending on the specific operation.

Here, when the voice instruction text includes an operation instruction to the measurement unit 101, the automatic analysis device may execute an operation not intended by the user due to erroneous recognition in voice recognition such that the inspection efficiency decreases or an accident occurs. Therefore, in the embodiment, to avoid the problem, a threshold based on the device state data of the device and an accuracy of the voice instruction text is predetermined, and only when the accuracy of the voice instruction text is the threshold or more, the execution of the operation instruction represented by the voice instruction text is executable.

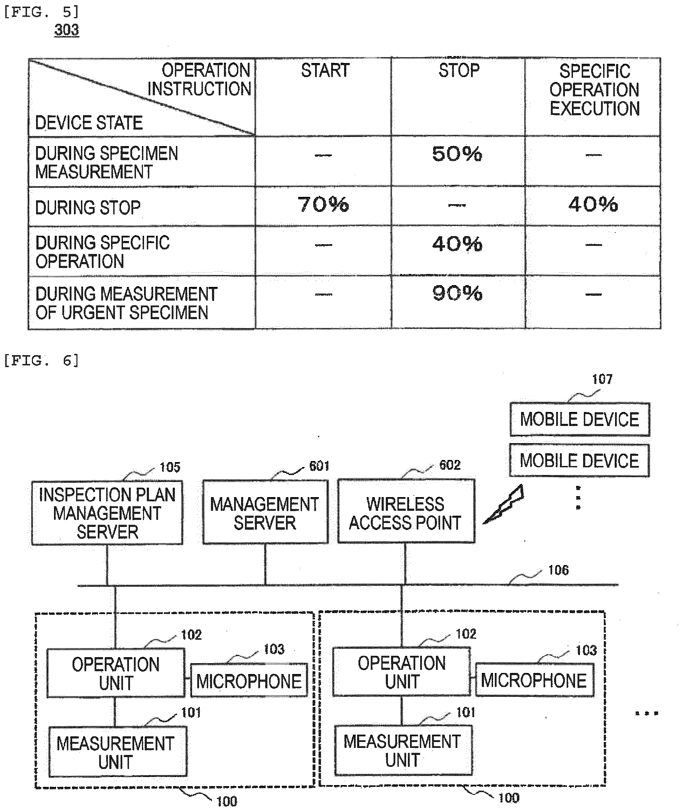

Fig. 5 illustrates a data structure of a determination table 303 where the threshold of the accuracy of the voice recognition is set. In the determination table 303, the vertical axis represents the device state of the automatic analysis device (for example, "during specimen measurement", "during stop", "during specific operation" (in the example, the specific operations are collectively shown, but individual specific operations (maintenance, calibration, precision management, and the like) may be set), or "during measurement of urgent specimen"), and the horizontal axis represents the operation instruction (for example, "start", "stop", or "specific operation execution" (similarly, individual specific operations may be set)). In each cell, whether the operation instruction is valid or invalid is registered for a combination of the device state data and the operation instruction and, when the operation instruction is valid, a threshold of the accuracy of the voice recognition that makes the operation instruction valid is set. Here, as the accuracy of the voice recognition, for example, a rate of concordance between the voice instruction text and a character string of the operation instruction can be used. For example, when the voice instruction text is "haintenance", the accuracy with the specific operation instruction "maintenance" is 90% (=10/11) because 10 characters are the same among 11 characters.

When the process does not correspond to Step 401, the determination table 303 stored in the storage 203 is read, and a cell corresponding to the operation instruction recognized based on the latest device state data and voice instruction text currently is searched for (Step 402). For example, a cell where the device state is "during measurement of urgent specimen" and the operation instruction is "stop" is set to "90%". While the device is measuring the urgent specimen, when the device erroneously recognizes that "stop" is instructed from the user by voice and stops the measurement of the urgent specimen, the effect of inspection delay is significantly large. Therefore, only when the accuracy of the voice recognition is 90% or more, it is determined that the stop of the measurement is executable (valid). On the other hand, a cell set to "-" shows that it is determined that the operation corresponding to the recognized operation instruction is not executed (not executable, invalid). For example, a cell where the device state is "during specimen measurement" and the operation instruction is "start" is set to "-" (invalid). The device is already measuring a specimen, and thus even when "start" is instructed from the user by voice, the operation to be executed is not present.

When the corresponding cell is not detected in the determination table 303 or when the value of the corresponding cell is "-", the process ends without giving a control instruction to the measurement unit 101 (Step 403) . Here, it is desirable that the screen display/voice output unit 216 outputs a guidance corresponding to the cause to the user using a screen or a voice. For example, when the operation instruction registered in the determination table 303 is not recognized from the voice instruction text, "the operation instruction cannot be recognized" is notified to the user, and when the corresponding cell is set to "-", "the operation instruction cannot be executed at the moment" is notified to the user.

When No is determined in Step 403, the accuracy of the voice recognition is calculated and is compared to the set value of the cell. A method of calculating the accuracy of the voice recognition is as described above. For example, the accuracy is multiplied by a coefficient for calculation such that, when the volume of the voice of the user is sufficiently large, the accuracy increases and, when the ambient noise is large, the accuracy decreases. When the calculated accuracy is less than the set value of the determination table 303, the process ends without executing anything (Step 404). Here, it is desirable that the screen display/voice output unit 216 outputs a guidance corresponding to the end cause to the user using a screen or a voice. For example, a guidance "the accuracy of the voice recognition is low, please speak the instruction again" may be output using the screen or the voice. When a difference between the calculated accuracy and the set value is less than a given value, the screen display/voice output unit 216 may output a confirmation message "Is your designation 'maintenance execution'?" using the screen or the voice.

Next, whether the user is in a location distant from the automatic analysis device is investigated (Step 405). For example, when a voice is caught by the microphone 103, it is determined that, as the volume decreases, the user is in a location more distant from the automatic analysis device. When a voice is acquired from the mobile device 107, the determination is made based on position information or a received field intensity of the mobile device 107.

When it is determined that the user who makes the voice instruction is in a location distant from the automatic analysis device in Step 405, the user may give an instruction to the automatic analysis device without visually checking the automatic analysis device or the surrounding state thereof. Here, the automatic analysis device may be operated while a determined safety measure is not taken. Therefore, for the sake of attention, the screen display/voice output unit 216 outputs a confirmation message "Do you really want to execute the operation?" using the screen or the voice. After the instruction is given to execute the operation again in response to the confirmation, the operation instruction is transmitted to the control instruction output unit 215 (Step 407), and the operation permission determination process ends. When the user operates the automatic analysis device from a distant location, "being remotely operated" may be displayed on the screen of the automatic analysis device.

When it is determined that the user is not in a location distant from the automatic analysis device in Step 405, it is determined that the user checks the automatic analysis device and the surrounding state, the operation instruction is transmitted to the control instruction output unit 215 (Step 406), and the process ends.

Hereinabove, in the first embodiment, the example where the operation of the measurement unit 101 that accompanies a mechanical operation is instructed by voice is described, but the present invention is not limited thereto. Parameter input or screen transition (for example, next, back, or hierarchical display of a menu) may be operated on the operation unit 102 by voice. For example, regarding the screen transition, by simply speaking short words to display a screen that cannot displayed without passing through several screens, the convenience can be further improved.

### Second Embodiment

In a second embodiment, an example where a plurality of users operate a plurality of automatic analysis devices by voice will be described. Fig. 6 is a diagram illustrating a configuration example of the automatic analysis system according to the second embodiment. The same components as those of the configuration of the first embodiment are represented by the same reference numerals, and the description thereof will not be repeated.

A plurality of automatic analysis devices 100 are communicably connected to the inspection plan management server 105, a management server 601, and a wireless access point 602 via the network 106. In the second embodiment, the mobile device 107 is connected to the management server 601 via the wireless access point 602. The management server 601 receives voice data from a plurality of mobile devices 107, identifies an appropriate automatic analysis device from the automatic analysis devices managed by the management server 601 (the automatic analysis devices connected to the network 106), and transmits the identified automatic analysis device to the operation unit. Here, the example where the inspection plan management server 105 is connected to the network 106 is shown. However, the inspection plan management server 105 may be configured to be connected to the management server 601 via a network different from the network 106 without being connected to the network 106. Here, in the automatic analysis system, the management server 601 acquires inspection plan data from the inspection plan management server 105 via the different network such that the function of the inspection plan management server 105 in the first embodiment can be exhibited.

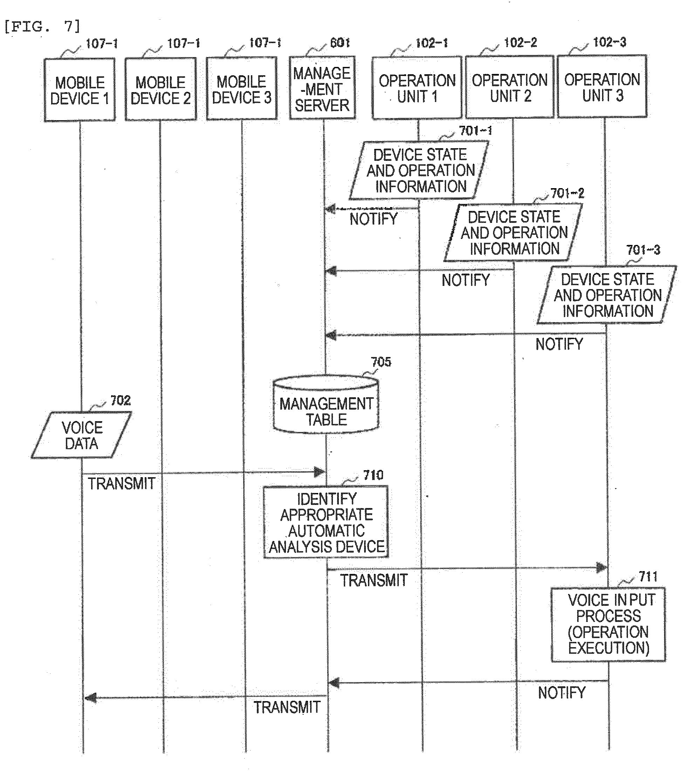

Fig. 7 is a diagram illustrating a voice input process sequence example of the automatic analysis system in the second embodiment. The automatic analysis system includes n automatic analysis devices 100 and m mobile devices 107. Fig. 7 illustrates the example where n = m = 3. The operation units 102-1 to 102-n of the automatic analysis devices 100-1 to 100-n regularly transmit device state/operation information data 701 to the management server 601. The device state/operation information data 701 includes the device state of the measurement unit and information regarding the operation of the automatic analysis device where the measurement unit is changed from the previous device state to the corresponding device state. Alternatively, when the change of the device state is detected, the device state/operation information data 701 is transmitted to the management server 601. As a result, the management server 601 can always grasp the latest device states of the automatic analysis devices 100-1 to 100-n. On the other hand, the user speaks words representing "which operation is executed on which automatic analysis device", for example, "device No. 1, start", "device No. 2, stop", or "device No. 3, maintenance start" to the microphone of the mobile device 107. The mobile device 107 acquires the speech of the user as voice data 702 and transmits the voice data 702 to the management server 601.

The management server 601 converts the voice data 702 into voice instruction text, identifies an appropriate automatic analysis device when the designated automatic analysis device is not present or the device is not designated (Step 710), and transmits the voice data 702 to the operation unit 102 of the identified device. The operation unit 102 receives the transmitted voice data 702, executes the voice input process sequence, and executes the operation instruction instructed in the voice data 702 (Step 711). The automatic analysis device to which the voice data 702 is transmitted executes the voice input process sequence described in the first embodiment. When the instructed operation is completed, the automatic analysis device transmits the completion notification and, as necessary, the execution result to the management server 601. The management server 601 transmits the notification and result to the mobile device 107 to which the voice data 702 is transmitted (referred to as "access source mobile device").

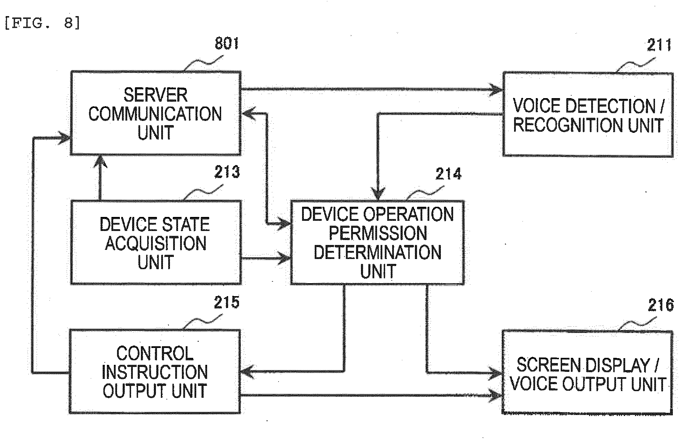

Fig. 8 illustrates a configuration example of software blocks relating to the voice input process of the operation unit 102. A server communication unit 801 transmits and receives necessary data to and from the management server 601. In the second embodiment, the automatic analysis device to which the voice data 304 is transmitted executes the voice input process sequence described in the first embodiment. The server communication unit 801 is configured to exhibit the function of the inspection plan acquisition unit 212 in the first embodiment, and the server communication unit 801 can execute the voice input process sequence of the first embodiment by acquiring the inspection plan data 302 from the management server 601 (or the inspection plan management server 105).

The voice detection/recognition unit 211 executes a process of acquiring the voice data 304 from the server communication unit 801 and recognizing the content thereof. The device state acquisition unit 213 acquires the device state data of the measurement unit 101 and transmits the device state data to the server communication unit 801 to notify the device state data to the management server 601. The device operation permission determination unit 214 determines whether the device operation corresponding to the operation instruction of the user recognized by the voice detection/recognition unit 211 is permitted based on the device state data acquired by the device state acquisition unit 213 and the information of the inspection schedule acquired by the server communication unit 801. The control instruction output unit 215 receives an operation instruction of the user from the device operation permission determination unit 214 and transmits the corresponding control instruction to the measurement unit 101. When the execution of the operation of the measurement unit 101 is completed, the completion notification and, as necessary, the execution result are transmitted to the server communication unit 801 to be notified to the mobile device 107 via the management server 601. The screen display/voice output unit 216 executes a process of displaying the result of device operation or analysis, measurement on a screen or outputting the result of device operation or analysis measurement from a speaker by voice.

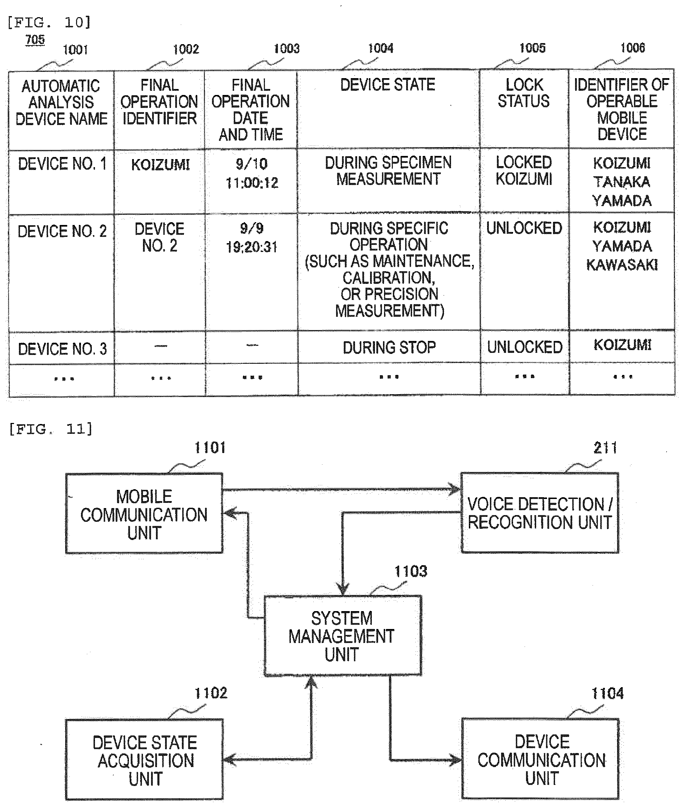

Fig. 11 illustrates a configuration example of software blocks relating to the voice input process of the management server 601. The hardware configuration of the management server 601 is the same as the hardware configuration of the operation unit 102 illustrated in Fig. 2A, and thus the description thereof will not be repeated.

The voice detection/recognition unit 211 executes a process of acquiring the voice data 702 of the mobile device 107 from a mobile communication unit 1101 and recognizing the content thereof. A device state acquisition unit 1102 acquires the device state/operation information data 701 from each of the automatic analysis devices 100-1 to 100-n and transmits the device state/operation information data 701 to a system management unit 1103. The system management unit 1103 identifies the automatic analysis device corresponding to the operation instruction of the user recognized by the voice detection/recognition unit 211 based on the device state/operation information data 701 acquired by the device state acquisition unit 1102. A device communication unit 1104 transmits the voice data from the mobile device 107 to the identified automatic analysis device.

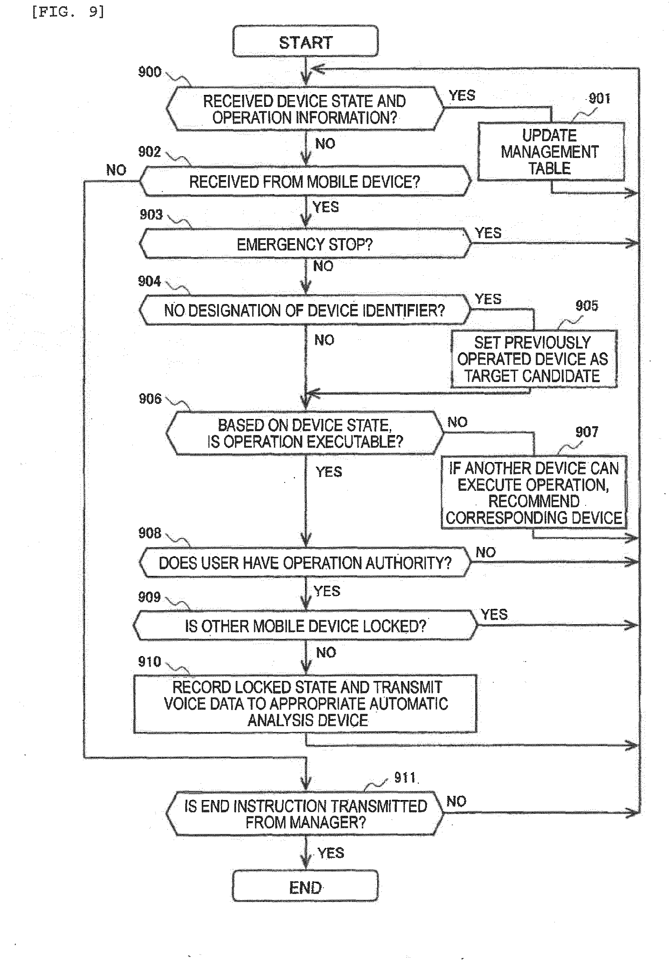

The content of a voice input process program that is executed by the management server 601 will be described using a flowchart of Fig. 9. The management server 601 includes the determination table 303 illustrated in Fig. 5 and a management table 705 described below. Note that, in the determination table in the management server 601, regarding the cell that is valid (not "-" (not executable)) as illustrated in Fig. 5 although the value of the cell is set to "-" (not executable, invalid), the threshold of the accuracy of the voice recognition may be set or may not be set.

First, when the device state/operation information data 701 is received from the operation unit 102 of the automatic analysis device 100 (Step 900), the cell of the management table 705 is updated by the received device state/operation information data 701 (Step 901), and the process returns to Step 900.

Fig. 10 illustrates a data structure of the management table 705. The management table 705 includes an automatic analysis device name column 1001, a final operation identifier column 1002, a final operation date and time column 1003, a device state column 1004, a lock status column 1005, and an operable mobile device identifier column 1006. In the automatic analysis device name column 1001, a name that identifies the automatic analysis device is recorded. As long as the device can be uniquely identified, the identifier is not limited to the name and may be an ID or an IP address. In the final operation identifier column 1002, a final operation subject for the automatic analysis device of the corresponding record is recorded based on the device state/operation information data 701. As the identifier, a device name or the like is used when the automatic analysis device is directly operated, and a log-in user name or the like of the mobile device 107 is used when the automatic analysis device is operated from the mobile device 107. In the final operation date and time column 1003, a final operation date and time relating to a final operation on the automatic analysis device of the corresponding record is recorded based on the device state/operation information data 701. When the automatic analysis device is operated by voice input from the mobile device 107, for example, a date and time at which voice data is received is recorded. In the device state column 1004, the latest device state of the automatic analysis device of the corresponding record is recorded based on the device state/operation information data 701. In the lock status column 1005, it is recorded whether the access source mobile device that gives the operation instruction locks the automatic analysis device of the corresponding record to prevent operations from other mobile devices. When the automatic analysis device is locked, the identifier of the access source mobile device that locks the automatic analysis device is recorded together. In the operable mobile device identifier column 1006, a list of identifiers of the mobile devices 107 that are permitted to operate the automatic analysis device of the corresponding record is recorded. The operable mobile device identifier is registered in advance by a system manager for each of the automatic analysis device.

When the mobile communication unit 1101 receives the voice data 702 from the mobile device 107 (Step 902), the mobile communication unit 1101 transmits the voice data to the voice detection/recognition unit 211, and the voice detection/recognition unit 211 converts the acquired voice data into voice instruction text. When the voice instruction text instructs "emergency stop" to all of the automatic analysis devices in the automatic analysis system, the system management unit 1103 transmits the voice data to all of the automatic analysis devices (Step 903). By defining "emergency stop" as the operation instruction on all of the automatic analysis devices managed by the management server, 601, the designation of the device name can be skipped. In each of the determination tables in the management server 601 and the operation units 102 of the automatic analysis devices 100, "emergency stop" is defined for the operation instruction, and the value of the cell thereof is valid regardless of the device state.

When the operation instruction including the voice instruction text is not "emergency stop", the system -management unit 1103 investigates whether the automatic analysis device to be operated is designated (Step 904). When the device name is not designated, the final operation identifier column 1002 and the final operation date and time column 1003 of the management table 705 are read, and the automatic analysis device that is operated by the access source mobile device at the latest date and time is detected. When the corresponding mobile device is detected, the automatic analysis device is set as a candidate to be operated (Step 905). As a result, when a voice is continuously input to the same automatic analysis device, the user can skip speaking the automatic analysis device name, and the convenience of the user can be improved. Here, when the final operation date and time is earlier than the current date and time by a predetermined time or longer, it is determined that the voice input is not continuous, and the automatic analysis device does not need to be set as a candidate to be operated.

Next, whether the instructed operation is executable is investigated based on the device state of the automatic analysis device (Step 906). The system management unit 1103 acquires the device state of the automatic analysis device from the management table 705, and refers to the determination table to acquire the value of the cell corresponding to the device state and the operation instruction representing the voice instruction text. When the value of the cell is valid, the process proceeds to Step 908. On the other hand, when the value of the cell is "-" (not executable), the corresponding operation instruction is not executable or is meaningless, and the user may have erroneously designated the automatic analysis device to be operated. Therefore, the system management unit 1103 acquires the device states of the other automatic analysis devices from the device state column 1004 of the management table 705, and also determines the validity of the operation instructions using the determination table. In the automatic analysis device where the value of the cell is valid, the operation instruction is executable. Therefore, the automatic analysis device is likely to be a device that is intended to be operated by the user. Accordingly, for example, when the automatic analysis device where the value of the cell is valid is the device No. 3, the system management unit 1103 outputs a recommendation message "Do you mean device No. 3?" through the mobile communication unit 1101 (Step 907), and the process returns to Step 900.

On the other hand, when the automatic analysis device to be operated can execute the operation instruction, the system management unit 1103 investigates whether the user has operation authority for the automatic analysis device (Step 908). The cell of the automatic analysis device is investigated in the operable mobile device identifier column 1006 of the management table 705, and when the cell includes the identifier of the access source mobile device, it is determined that the user has the operation authority, the process proceeds to Step 909. On the other hand, when the cell does not include the identifier of the access source mobile device, it is determined that the user does not have the operation authority, the process returns to Step 900. Here, data representing that the user does not have the operation authority may be transmitted from the mobile communication unit 1101 to the access source mobile device such that the access source mobile device displays, on a screen or outputs by voice, a result such as "you do not have operation authority of device No. 3".

Next, the system management unit 1103 investigates whether other mobile devices 107 locked the automatic analysis device candidate to be operated (Step 909). Whether the automatic analysis device candidate to be operated is locked can be checked from the lock status column 1005 of the management table 705. When the automatic analysis device candidate to be operated is not locked or is locked by the access source mobile device itself, it is determined that the operation is executable, and the process proceeds to Step 910. When the automatic analysis device candidate to be operated is locked by another mobile device, it is determined that the operation is not executable, and the process returns to Step 900. Here, data representing that the automatic analysis device is locked by another mobile device may be transmitted from the mobile communication unit 1101 to the access source mobile device such that the access source mobile device displays, on a screen or outputs by voice, a result such as "device is locked by another mobile device and thus cannot be operated".

A method of allowing the user to lock or unlock a specific automatic analysis device may be, for example, explicit designation by the user such as "device No. 1, start locking" or "device No. 1, unlock". Alternatively, for a predetermined period of time from the time when voice data representing a specific voice instruction is transmitted to the automatic analysis device, the automatic analysis device to which the voice data is transmitted may be set to enter a locked state.

When a locking instructionis given from the user or when the automatic analysis system is set to enter a locked state in response to a specific voice instruction, the system management unit 1103 records that the lock status of the automatic analysis device to be operated in the management table 705 is locked by the access source mobile device, and transmits the voice data from the device communication unit 1104 to the operation unit 102 of the identified automatic analysis device (Step 910), and the process returns to Step 900.

When the voice data is not received from the mobile device 107 in Step 902, whether an end instruction is given from the manager of the automatic analysis system is investigated (Step 911). When the end instruction is given, the program ends. When the end instruction is not given, the program returns to Step 900.

In the above-described second embodiment, the example is described where the voice data of the user is transmitted from the management server 601 to the automatic analysis device 100 and the voice input process sequence of the first embodiment is executed for each of the automatic analysis devices 100. Here, by setting the determination table 303 depending on the usage status of the automatic analysis device 100, the voice input process can be smoothly executed. On the other hand, in the management server 601, the analysis of the operation instruction according to the first embodiment may be executed using the determination table 303 (here, the threshold of the accuracy of the voice recognition is set in a cell that is valid in the determination table 303 of the management server 601) in the management server 601, and the voice instruction text recognized in the management server 601 may be transmitted to the automatic analysis device to be operated instead of transmitting the voice data to the automatic analysis device. Then, a calculation load required for the voice input process in each of the automatic analysis devices can be reduced.

### Reference Signs List

- 100:: automatic analysis device
- 101:: measurement unit
- 102:: operation unit
- 103:: microphone
- 105:: inspection plan management server
- 106:: network
- 107:: mobile device
- 201:: processor
- 202:: memory
- 203:: storage
- 204:: display interface
- 205:: input/output interface
- 206:: network interface
- 207:: voice input port
- 208:: bus
- 209:: display
- 210:: input device
- 211:: voice detection/recognition unit
- 212:: inspection plan acquisition unit
- 213:: device state acquisition unit
- 214:: device operation permission determination unit
- 215:: control instruction output unit
- 216:: screen display/voice output unit
- 301:: device state data
- 302:: inspection plan data
- 303:: determination table
- 304, 702:: voice data
- 601:: management server
- 602:: wireless access point
- 701:: device state/operation information data
- 705:: management table
- 801:: server communication unit
- 1001:: automatic analysis device name column
- 1002:: final operation identifier column
- 1003:: final operation date and time column
- 1004:: device state column
- 1005:: lock status column
- 1006:: operable mobile device identifier column
- 1101:: mobile communication unit
- 1102:: device state acquisition unit
- 1103:: system management unit
- 1104:: device communication unit

## Claims

1. An automatic analysis device comprising:
an operation unit configured to receive a voice input from a microphone or a mobile device; and
a measurement unit configured to analyze a specimen, wherein
the operation unit includes
a device state acquisition unit configured to acquire device state data of the measurement unit,
a voice detection/recognition unit configured to acquire voice data that is a digital signal converted from a voice input to the microphone or voice data that is a digital signal converted from a voice input to the mobile device and to convert the voice data into a voice instruction text, and
a device operation permission determination unit configured to determine, when the voice instruction text includes an operation instruction to the measurement unit, whether the operation instruction including the voice instruction text is executable based on the device state data of the measurement unit acquired by the device state acquisition unit and an accuracy of the voice instruction text.

2. The automatic analysis device according to claim 1, wherein
the device operation permission determination unit determines whether the operation instruction including the voice instruction text is executable using a determination table, and
in the determination table, whether the operation instruction is valid or invalid is registered for a combination of the device state data of the measurement unit and the operation instruction and, when the operation instruction is valid, a threshold of the accuracy of the voice instruction text that makes the operation instruction valid is set.

3. The automatic analysis device according to claim 1, wherein
the accuracy of the voice instruction text is calculated based on a rate of concordance between the voice instruction text and a character string of the operation instruction.

4. The automatic analysis device according to claim 1, wherein
the operation unit includes a screen display/voice output unit, and
when the device operation permission determination unit determines that the voice input is made from a user in a location distant from the automatic analysis device, the screen display/voice output unit asks the user for confirmation using a screen or a voice whether to execute the operation instruction including the voice instruction text.

5. The automatic analysis device according to claim 4, wherein
the device operation permission determination unit determines whether the voice input is made from the user in the location distant from the automatic analysis device based on a volume of the microphone that makes the voice input or position information or a received field intensity of the mobile device to which the voice is input.

6. The automatic analysis device according to claim 1, wherein
the operation unit includes an inspection plan acquisition unit connected to an external server and configured to acquire an inspection schedule of the automatic analysis device from the external server, and
when the voice instruction text includes an operation instruction to the measurement unit, the device operation permission determination unit determines whether the operation instruction including the voice instruction text is executable based on the inspection schedule of the automatic analysis device acquired by the inspection plan acquisition unit and the operation instruction including the voice instruction text.

7. The automatic analysis device according to claim 6, wherein
when the operation instruction including the voice instruction text is start of a predetermined specific operation and the specific operation is scheduled within a predetermined time in the inspection schedule of the automatic analysis device acquired by the inspection plan acquisition unit, the device operation permission determination unit determines that the operation instruction representing the start of the specific operation is not executable.

8. The automatic analysis device according to claim 1, wherein
the mobile device is any one of a pin microphone, a headphone, a smartphone, a tablet, smart glasses, or a smart watch including the microphone.

9. An automatic analysis system comprising:
a plurality of automatic analysis devices each of which includes a measurement unit configured to analyze a specimen; and
a management server configured to connect the plurality of automatic analysis devices via a network and to manage the plurality of automatic analysis devices, wherein
one or more automatic analysis devices among the plurality of automatic analysis devices are operated through a voice input from a mobile device, and
the management server includes
a device state acquisition unit configured to acquire device state/operation information data including device state data of the measurement unit and operation information for the automatic analysis device relating to the device state data from the plurality of automatic analysis devices,
a voice detection/recognition unit configured to acquire voice data that is a digital signal converted from a voice input to the mobile device and to convert the voice data into a voice instruction text,
a system management unit configured to identify, when the voice instruction text includes an operation instruction to the automatic analysis device, an automatic analysis device to be operated by the operation instruction including the voice instruction text, and
a device communication unit configured to transmit voice data acquired from the mobile device or a voice instruction text corresponding to the voice data to the automatic analysis device identified by the system management unit.

10. The automatic analysis device according to claim 9, wherein
the system management unit identifies the automatic analysis device to be operated by the operation instruction including the voice instruction text using a management table,
in the management table, for each of the plurality of automatic analysis devices, an identifier of the mobile device capable of operating the automatic analysis device, device state data of the measurement unit of the automatic analysis device, an identifier of a subject that operates the automatic analysis device to enter a device state of the device state data, a date and time at which the subject operated the automatic analysis device to enter the device state of the device state data, and a lock status of the automatic analysis device are registered, and
the management table is updated based on the device state/operation information data acquired by the device state acquisition unit.

11. The automatic analysis system according to claim 10, wherein
when the voice instruction text includes designation of an automatic analysis device to be operated by the voice instruction text, the system management unit selects the automatic analysis device designated by the voice instruction text as an automatic analysis device candidate to be operated, and
when the voice instruction text does not include designation of the automatic analysis device to be operated by the voice instruction text, the system management unit refers to the management table to select; as the automatic analysis device candidate to be operated, an automatic analysis device where the mobile device transmitting the voice data is registered as the subject that operated the automatic analysis device most recently.

12. The automatic analysis system according to claim 11, wherein
the system management unit refers to the management table and selects, as the automatic analysis device candidate to be operated, an automatic analysis device where the mobile device transmitting the voice data is registered as the subject that operated the automatic analysis device most recently and a predetermined period of time did not elapse from a latest operation date and time.

13. The automatic analysis system according to claim 10, wherein
the system management unit refers to the management table and, when the automatic analysis device selected as the candidate to be operated cannot respond to the operation instruction including the voice instruction text, recommends an automatic analysis device that can respond to the operation instruction including the voice instruction text to the mobile device transmitting the voice data.

14. The automatic analysis system according to claim 10, wherein
the system management unit refers to the management table and, when the automatic analysis device selected as the candidate to be operated can respond to the operation instruction including the voice instruction text, if the mobile device transmitting the voice data has operation authority for the automatic analysis device and another mobile device did not lock the automatic analysis device, identifies the automatic analysis device as the automatic analysis device to be operated.

15. The automatic analysis system according to claim 9, wherein
when the voice instruction text is a specific operation instruction that is an operation instruction to all of the plurality of automatic analysis devices, the system management unit does not identify the automatic analysis device to be operated and causes the device communication unit to transmit voice data acquired from the mobile device or a voice instruction text corresponding to the voice data to all of the plurality of automatic analysis devices.
